(19) Europäisches Patentamt
European Patent Office
Office européen des brevets

(11) Veröffentlichungsnummer: **0 419 409 B1**

(12) # EUROPÄISCHE PATENTSCHRIFT

(45) Veröffentlichungstag der Patentschrift: **02.11.95**

(21) Anmeldenummer: **90810684.2**

(22) Anmeldetag: **11.09.90**

(51) Int. Cl.⁶: **C07F 15/00**, C07B 35/02, C07B 53/00, B01J 31/24, C07C 209/52

(54) **Iridiumkomplexe, Verfahren zu deren Herstellung und deren Verwendung.**

(30) Priorität: **18.09.89 CH 3387/89**

(43) Veröffentlichungstag der Anmeldung: **27.03.91 Patentblatt 91/13**

(45) Bekanntmachung des Hinweises auf die Patenterteilung: **02.11.95 Patentblatt 95/44**

(84) Benannte Vertragsstaaten: **BE CH DE FR GB IT LI NL**

(56) Entgegenhaltungen:

**JOURNAL OF ORGANOMETALLIC CHEMISTRY, Band 173, Nr. 2, 13. Juli 1979; G.R. CLARK et al., Seiten 231-251**

**JOURNAL OF ORGANOMETALLIC CHEMISTRY, Band 133, Nr. 2, 21. Juni 1977; M.A. BENNETT et al., Seiten 231-271**

**JOURNAL OF ORGANOMETALLIC CHEMISTRY, Band 118, Nr. 2, 05. Oktober 1976; M.A. BENNETT et al., Seiten 205-232**

**JOURNAL OF THE CHEMICAL SOCIETY, CHEMICAL COMMUNICATIONS, Nr. 20, 1986; N.W. ALCOCK et al., Seiten 1532-1534**

**JOURNAL OF THE CHEMICAL SOCIETY, CHEMICAL COMMUNICATIONS, Band 12, 1990; Y. NG CHEONG CHAN et al., Seiten 869-871**

(73) Patentinhaber: **CIBA-GEIGY AG**
**Klybeckstrasse 141**
**CH-4002 Basel (CH)**

(72) Erfinder: **Osborn, John A., Prof. Dr.**
**10, rue Daniel Hirtz**
**F-67000 Strasbourg (FR)**
Erfinder: **Ng Cheong Chan, You Ping**
**1, rue d'Oslo**
**F-67000 Strasbourg (FR)**
Erfinder: **Blaser, Hans-Ulrich, Dr.**
**Brücklismattstrasse 18**
**CH-4107 Ettingen (CH)**
Erfinder: **Spindler, Felix, Dr.**
**Dullikerstrasse 392**
**CH-4656 Starrkirch-Wil (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Iridiumhalogenkomplexe des dreiwertigen Iridiums, die ditertiäre Diphosphin- oder Diphosphinitliganden enthalten; ein Verfahren zu deren Herstellung und deren Verwendung als gegebenenfalls enantioselektive und/oder chemoselektive Katalysatoren zur Hydrierung von N-substituierten Iminen.

In den EP-A-0 301 457 und EP-A-0 256 982 wird die asymmetrische Hydrierung von N-substituierten Iminen mit einkernigen Komplexen des einwertigen Iridiums, die Olefinliganden und optisch aktive Diphosphin- oder Diphosphinitliganden enthalten, beschrieben. Es werden zwar hohe Ausbeuten und Enantiomerenüberschüsse erzielt, wobei aber der Katalysator schnell desaktiviert wird. Im Imin vorhandene Kohlenstoffdoppelbindungen werden im allgemeinen ebenfalls hydriert.

Ein Gegenstand der Erfindung sind Verbindungen der allgemeinen Formeln I oder Ia oder deren Gemische

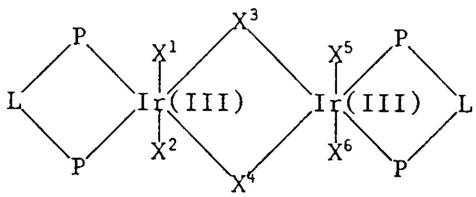

(I),

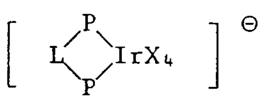 $M^{\oplus}$

(Ia),

worin die Gruppen P-L-P einen Liganden aus der Gruppe ditertiäres Diphosphin oder Diphosphinit bedeuten, deren Phosphingruppen oder Phosphinitgruppen P über 2 bis 4 C-Atome verknüpft sind, und die mit den Ir-Atomen einen 5-, 6- oder 7-gliedrigen Ring bilden, X, $X^1$, $X^2$, $X^3$, $X^4$, $X^5$ und $X^5$ unabhängig voneinander Cl, Br oder I darstellen, oder $X^1$ und $X^5$ für H und $X^2$, $X^3$, $X^4$ und $X^5$ unabhängig voneinander für Cl, Br oder I stehen, oder $X^1$ und $X^5$ für H und $X^2$, $X^3$, $X^4$ und $X^5$ unabhängig voneinander für Cl, Br oder I stehen, und $M^{\oplus}$ für ein Alkalimetallkation oder quaternäres Ammonium steht.

Die Phosphin- und Phosphinitgruppen enthalten bevorzugt zwei gleiche oder verschiedene, besonders gleiche Kohlenwasserstoffreste mit 1 bis 20, besonders 1 bis 12 C-Atomen.

Bevorzugte Verbindungen der Formel I sind solche, worin die Phosphin- und Phosphinitgruppen zwei gleiche oder verschiedene Reste aus der Gruppe linearem oder verzweigtem $C_1$-$C_{12}$-Alkyl, unsubstituiertem oder mit $C_1$-$C_6$-Alkyl substituiertem $C_5$-$C_8$-Cycloalkyl, Phenyl oder Benzyl, oder mit $C_1$-$C_6$-Alkoxy (z.B. Methoxy), $(C_1$-$C_6$-Alkyl$)_2N$- (z.B. Dimethylamino), F, $-SO_3H$, $-SO_3Na$ oder -COO-$C_1$-$C_6$-Alkyl (z.B. $-COOCH_3$) substituiertes Phenyl oder Benzyl enthalten.

Beispiele für Alkyl, das bevorzugt 1 bis 6 C-Atome enthält, sind Methyl, Ethyl, n-Propyl, i-Propyl, n-, i- und t-Butyl und die Isomeren von Pentyl und Hexyl. Beispiele für gegebenenfalls mit Alkyl substituiertes Cycloalkyl sind Cyclopentyl, Cyclohexyl, Methyl- oder Ethylcyclohexyl und Dimethylcyclohexyl. Beispiele für mit Alkyl substituiertes Phenyl und Benzyl sind Methylphenyl, Dimethylphenyl, Ethylphenyl und Methylbenzyl. Bevorzugte Reste sind t-Butyl, Cyclohexyl, Benzyl und besonders Phenyl.

Bevorzugt sind solche Verbindungen der Formel I, worin L in der Gruppe P-L-P unsubstituiertes oder mit $C_1$-$C_6$-Alkyl, $C_5$- oder $C_6$-Cycloalkyl, Phenyl, Naphthyl oder Benzyl substituiertes lineares $C_2$-$C_4$-Alkylen; 1,2- oder 1,3-Cycloalkylen oder -Cycloalkenylen, -Bicycloalkylen oder -Bicycloalkenylen mit 4 bis 10 C-Atomen, die unsubstituiert oder mit $C_1$-$C_6$-Alkyl, Phenyl oder Benzyl substituiert sind; oder solche cyclischen Reste, die in den

1- und/oder 2-Stellungen oder die in der 3-Stellung Methylen oder $C_2$-$C_4$-Alkyliden enthalten; in 2,3-Stellung mit

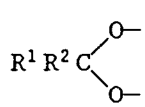

substituiertes 1,4-Butylen, das in den 1,4-Stellungen unsubstituiert oder mit $C_1$-$C_6$-Alkyl, Phenyl oder Benzyl substituiert ist, wobei $R^1$ und $R^2$ unabhängig voneinander H, $C_1$-$C_6$-Alkyl, Phenyl oder Benzyl bedeutet; 3,4-oder 2,4-Pyrrolidinylen oder 2-Methylen-pyrrolidin-4-yl, deren N-Atom mit der Gruppe $R^3$ gleich H, $C_1$-$C_{12}$-Alkyl, Phenyl, Benzyl, $C_1$-$C_{12}$-Alkoxycarbonyl, $C_1$-$C_8$-Acyl oder $C_1$-$C_{12}$-Alkylaminocarbonyl substituiert ist; 1,2-Phenylen, 2-Benzylen, 1,2-Xylylen, 1,8-Naphthylen, 2,2'-Dinapbthylen oder 2,2'-Diphenylen, die unsubstituiert oder mit $C_1$-$C_4$-Alkyl substituiert sind, darstellt; und P in der Gruppe P-L-P eine sekundäre Phosphingruppe oder Phosphinitgruppe bedeutet.

Bevorzugt sind auch Verbindungen der Formel I, worin L in der Gruppe P-L-P der Dioxylrest eines geschützten Mono- oder Disaccharids ist und die P für einen einwertigen sekundären Phosphinrest stehen.

L in der Gruppe P-L-P kann ein oder mehrere, z.B. 1 bis 3, besonders 1 oder 2 chirale C-Atome enthalten und in Form von Racematen oder optischen Isomeren vorliegen. Besonders bevorzugt sind Verbindungen der Formel I, worin die Gruppen P-L-P für ein Enantiomeres oder Diastereoisomeres eines ditertiären Diphosphins oder Diphosphinits stehen.

Eine bevorzugte Untergruppe von Verbindungen der Formel I sind solche, worin die Gruppe P-L-P den Formeln

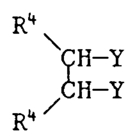 , 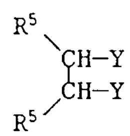 , 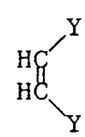 , 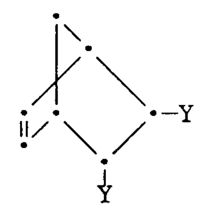 ,

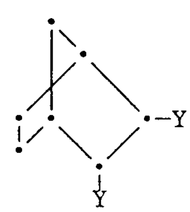 , 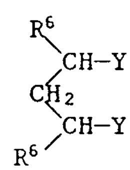 , 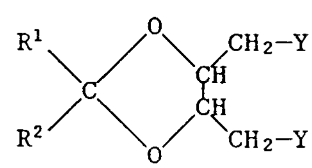 ,

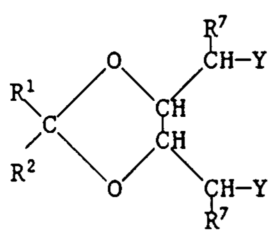 , 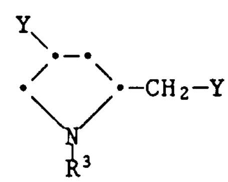 , 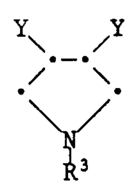 oder

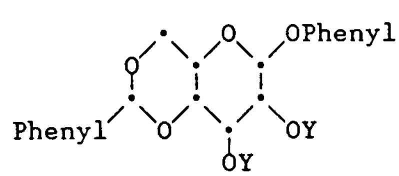 ,

entspricht, wobei Y -P(Phenyl)$_2$ bedeutet, $R^4$, $R^5$ und $R^6$ H, $C_1$-$C_4$-Alkyl, Cyclohexyl, Phenyl oder Benzyl darstellen, $R^1$ und $R^2$ H, $C_1$-$C_4$-Alkyl, Phenyl oder Benzyl und $R^7$ H oder $C_1$-$C_4$-Alkyl sind, und $R^3$ für H, $C_1$-$C_4$-Alkyl, Phenyl, Benzyl, $C_1$-$C_6$-Alkoxy-CO-, $C_1$-$C_6$-Alkyl-CO-, Phenyl-CO-, Naphthyl-CO- oder $C_1$-$C_4$-AlkylNH-CO- steht.

Geeignete Diphosphine und Diphosphinite sind z.B. von H.B. Kagan in Chiral Ligands for Asymmetric Catalysis, Asymmetric Synthesis, Volume 5, S. 13-23, Academic Press, Inc., N.Y. (1985) beschrieben worden.

Einige Beispiele sind (Ph steht für Phenyl):

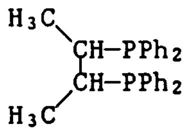 , 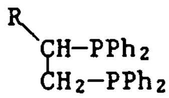 R = Methyl, Phenyl, Cyclohexyl,

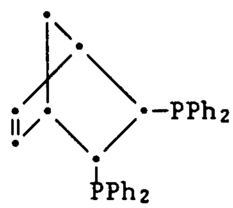 , 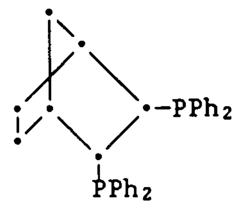 ,

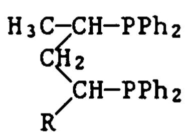 $R=H, CH_3$ , 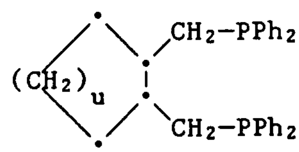 u=0, 1, 2 ,

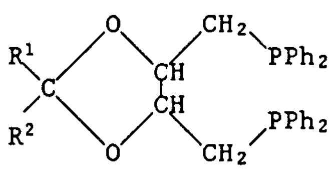 $R^1=H, CH_3, Ph$, $R^2=H, CH_3, Ph$ 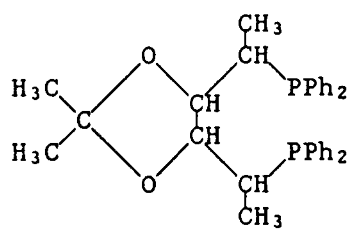 ,

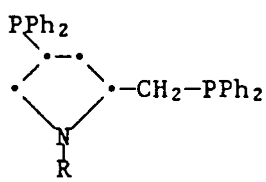 R=$-CO_2$-t-Butyl, -CO-t-Butyl, -CO-Phenyl, $-CONHC_1-C_4$-Alkyl, H.

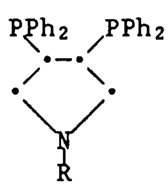 R=Benzyl, $C_1-C_4$-Alkyl.

Ein Beispiel für Diphosphinite ist das bevorzugte 1-O-Phenyl-4,6-O-(R)-benzyliden-2,3-O-bis-(diphenylphosphino)-$\beta$-D-glucopyranosid der Formel

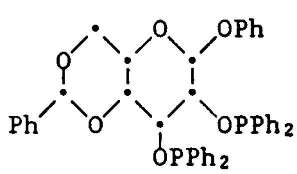 .

Eine bevorzugte Ausführungsform sind solche Verbindungen der Formel I, worin die Gruppe P-L-P der Formel

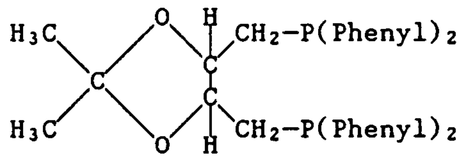

entspricht.

Bedeuten $X^2$ bis $X^5$ beziehungsweise $X^1$ bis $X^5$ ein Halogenatom, so handelt es sich besonders um gleiche Halogenatome, besonders um I. $X^1$ und $X^5$ können für H stehen und $X^2$ bis $X^5$ je Cl, Br oder besonders I bedeuten. $X^1$ und $X^5$ können für H stehen und $X^2$, $X^3$, $X^4$ und $X^5$ je Cl, Br oder I bedeuten. $X^1$ bis $X^5$ können auch je für Cl, Br oder besonders I stehen.

Die vier X in Formel Ia stehen bevorzugt je für Cl, Br und besonders I. $M^{\oplus}$ in Formel Ia steht bevorzugt für $Li^{\oplus}$, $Na^{\oplus}$ oder $K^{\oplus}$ oder $(C_1-C_6\text{-Alkyl})_4N^{\oplus}$.

Ein weiterer Gegenstand der Erfindung ist ein Verfahren zur Herstellung von Verbindungen der Formeln I, Ia oder deren Gemische, das dadurch gekennzeichnet ist, dass man bei erhöhter Temperatur in einem Keton als Lösungsmittel eine Verbindung der Formel II

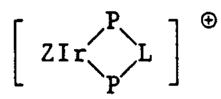 $A^{\ominus}$ (II),

worin Z für zwei Olefinliganden oder einen Dienliganden steht, $A^{\ominus}$ das Anion einer Sauerstoffsäure oder Komplexsäure darstellt und die Gruppe P-L-P die zuvor angegebene Bedeutung hat, mit einem Ueberschuss eines Salzes der Formel III

$M^{\oplus}X^{\ominus}$ (III),

worin $M^{\oplus}$ für ein Alkalimetall oder quaternäres Ammonium steht und X Cl, Br oder I bedeutet, oder mit Mischungen dieser Salze umsetzt.

In der Formel II kann Z als Olefinligand z.B. Buten, Propen und besonders Ethylen sein und der Dienligand ist bevorzugt ein offenkettiges oder cyclisches Dien, dessen Diengruppen durch ein oder zwei C-Atome getrennt sind. Das Dien ist bevorzugt Hexadien, Cyclooctadien oder Norbornadien.

Beispiele für $A^{\ominus}$ in Formel II sind $ClO_4^{\ominus}$, $CF_3SO_3^{\ominus}$, $BF_4^{\ominus}$, $B(Phenyl)_4^{\ominus}$, $PF_6^{\ominus}$, $SbCl_6^{\ominus}$, $AsF_6^{\ominus}$ und $SbF_6^{\ominus}$.

Die Iridiumverbindungen der Formel II sind bekannt oder können nach bekannten Verfahren hergestellt werden, siehe z.B. R. Uson et al., Inorg. Chim. Acta 73, S. 275 ff (1983); S. Brunie et al., Journal of Organometallic Chemistry, 114 (1976), S. 225-235 und M. Green et al., J. Chem. Soc. (A), S. 2334 ff (1971).

Die Iridiumverbindungen der Formel II können als isolierte Verbindungen eingesetzt werden. Es ist zweckmässig, die Verbindungen in situ herzustellen und direkt zu verwenden.

Die Umsetzung kann bei Temperaturen von 40 bis 200 °C, bevorzugt 50 bis 150 °C durchgeführt werden.

Geeignete Ketone als Lösungsmittel sind z.B. Aceton, Methyl-Ethylketon, Methyl-Isobutylketon, Cyclopentanon, Cyclohexanon und Methylcyclohexanon.

Das Molverhältnis von Verbindungen der Formel II zu Verbindungen der Formel III kann z.B. 1:5 bis 1:100, bevorzugt 1:10 bis 1:50 betragen. Die Umsetzung wird vorteilhaft unter Inertgasatmosphäre, z.B. Edelgasen durchgeführt.

Die Umsetzung wird im allgemeinen so durchgeführt, dass man die Verbindung der Formel II in einem Lösungsmittel löst und dann die Verbindung der Formel III zugibt. Danach erhitzt man einige Zeit, z.B. 2 bis 10 Stunden, und lässt das Reaktionsgemisch abkühlen. Zur Isolierung der gewünschten Verbindungen wird der feste Niederschlag abgetrennt und durch Umkristallisation gereinigt.

Verbindungen der Formel I, in denen $X^1$ bis $X^5$ je für Cl, Br oder I stehen, können durch Umsetzung mit z.B. 1 bis 100 mol Verbindung der Formel III in Verbindungen der Formel Ia übergeführt werden.

Mit den erfindungsgemässen Verfahren werden im allgemeinen zunächst Mischungen von Verbindungen der Formeln I′, I″, I‴ und Ia gebildet:

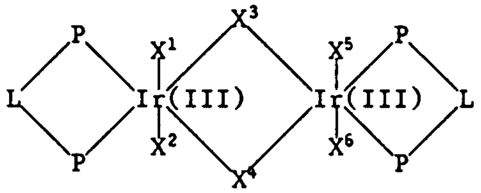

$I'$ : $X^1$ bis $X^6$ = Cl, Br, I.
$I''$ : $X^1$, $X^6$ = H, $X^2$ - $X^5$ = Cl, Br, I.
$I'''$: $X^1$, $X^5$ = H, $X^2$ - $X^4$,
$X^6$ = Cl, Br, I.

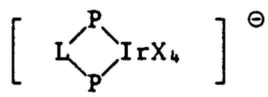 $M^{\oplus}$ (Ia).

Die Bildung der Verbindungen der Formel I″ und I‴ kann durch Wasser in der Reaktionsmischung erfolgen, das durch Aldolkondensation der als Lösungsmittel verwendeten Ketone entsteht. Die Zusammensetzung der Mischung hängt im wesentlichen von der Wahl des Diphosphins P-L-P ab.

Wenn der offenkettige Ligand P-L-P mit dem Ir-Atom einen Fünfring bildet, können hauptsächlich Verbindungen der Formel Ia gebildet werden, z.B. mit einem Anteil von bis zu 95 %. Wenn der Ligand P-L-P mit dem Ir-Atom einen Sechs- oder Siebenring bildet, oder wenn L ein zweiwertiger cyclischer oder polycyclischer Rest ist, werden überwiegend Verbindungen der Formel I″ gebildet, z.B. mit einem Anteil von bis zu 95 %. Die einzelnen Verbindungen können in einfacher Weise durch Umkristallisation in reiner Form hergestellt werden.

Die Verbindungen der Formeln I und Ia sind in Form ihrer Gemische oder als reine Verbindungen hervorragende homogene Katalysatoren für die Hydrierung von N-substituierten Iminen unter milden Reaktionsbedingungen. Sie weisen eine hohe katalytische Aktivität auf und man kann hohe Ausbeuten bis zu 100 % erzielen. Ein besonderer Vorteil ist die Wiederverwendbarkeit des Katalysators, der nach der Reaktion zurückgewonnen werden kann und praktisch keinen Aktivitätsverlust zeigt. Ferner weisen diese Verbindungen eine gute Stabilität gegenüber Sauerstoff auf, so dass bei der gesamten Hydrierung nicht auf einen vollständigen Luftausschluss geachtet werden muss. Sofern das Diphosphin oder Diphosphinit chirale C-Atome enthält und in den Verbindungen der Formel I und Ia deren Enantiomeren oder Diastereomeren gebunden sind, verläuft die Hydrierung bei Verwendung von prochiralen Iminen enantioselektiv, wobei gute optische Ausbeuten erzielt werden.

Die Verbindungen der Formel Ia und I″ zeichnen sich überraschend durch eine hohe Chemoselektivität aus. Es wurde gefunden, dass z.B. Ketogruppen, -CN, $-NO_2$, Kohlenstoffdoppelbindungen, N-Oxide, aromatische Halogengruppen und Amidgruppen nicht hydriert werden, wohl aber die Imingruppe.

Ein weiterer Gegenstand der Erfindung ist die Verwendung von Verbindungen der Formeln I, Ia oder deren Gemische als homogene Katalysatoren zur Hydrierung von N-substituierten Iminen, besonders zur chemoselektiven Hydrierung von Iminen mit den zuvor genannten funktionellen Gruppen.

Bevorzugt ist die Verwendung, worin in Formel I und Ia die Gruppe P-L-P ein Enantiomer oder Diastereomer eines ditertiären Diphosphins oder Diphosphinits ist, zur asymmetrischen und gegebenenfalls chemoselektiven Hydrierung von N-substituierten prochiralen Iminen.

Ein weiterer Gegenstand der Erfindung ist ein Verfahren zur Herstellung von sekundären Aminen durch Hydrierung von N-substituierten Iminen mit Wasserstoff bei einer Temperatur von -20 bis 80 °C und einem Wasserstoffdruck von $10^5$ bis $5 \cdot 10^7$ Pa in Gegenwart eines Iridiumkomplexes als homogener Katalysator, das dadurch gekennzeichnet ist, dass man als Katalysator eine Verbindung der Formel I, Ia oder deren Gemische einsetzt.

Bevorzugt ist ein Verfahren zur Herstellung von optisch aktiven sekundären Aminen, das dadurch gekennzeichnet ist, dass in Formel I und Ia die Gruppe P-L-P ein Enantiomer oder Diastereomer eines ditertiären Diphosphins oder Diphosphinits darstellt und ein prochirales N-substituiertes Imin eingesetzt wird.

Das Verfahren wird bevorzugt bei einer Temperatur von -20 bis 80 °C, besonders -20 bis 50 °C, und bevorzugt bei einem Wasserstoffdruck von $2 \cdot 10^5$ bis $3 \cdot 10^6$ Pa, besonders $8 \cdot 10^5$ bis $3 \cdot 10^6$ Pa durchgeführt.

Die Verbindungen der Formeln I und Ia oder deren Gemische werden bevorzugt in Mengen von 0,001 bis 10 Mol-%, besonders 0,01 bis 10 Mol-%, und insbesondere 0,1 bis 5 Mol-% verwendet, bezogen auf das Imin.

Eine bevorzugte Verfahrensdurchführung ist dadurch gekennzeichnet, dass man zusätzlich ein Ammonium- oder Alkalimetallchlorid, -bromid oder -jodid mitverwendet. Die Chloride, Bromide und Jodide werden

bevorzugt in Mengen von 0,01 bis 200, besonders 0,05 bis 100 Mol-% und insbesondere 0,5 bis 50 Mol-% eingesetzt, bezogen auf die Verbindungen der Formel I.

Als Salze sind die Chloride bevorzugt. Ammonium ist bevorzugt Tetraalkylammonium mit 1 bis 6 C-Atomen in den Alkylgruppen und als Alkalimetall ist Natrium, Lithium oder Kalium bevorzugt.

Die Reaktion kann ohne oder in Gegenwart von Lösungsmitteln durchgeführt werden. Geeignete Lösungsmittel, die alleine oder als Mischung von Lösungsmitteln eingesetzt werden können, sind besonders aprotische Lösungsmittel. Beispiele sind:

Aliphatische und aromatische Kohlenwasserstoffe, wie z.B. Pentan, Hexan, Cyclohexan, Methylcyclohexan, Benzol, Toluol und Xylol; Ether, wie z.B. Diethylether, Diethylenglykoldimethylether, Tetrahydrofuran und Dioxan; Halogenkohlenwasserstoffe, wie z.B. Methylenchlorid, Chloroform, 1,1,2,2-Tetrachlorethan und Chlorbenzol; Ester und Lactone, wie z.B. Essigsäureethylester, Butyrolacton und Valerolacton; Säureamide und Lactame, wie z.B. Dimethylformamid, Dimethylacetamid und N-Methylpyrrolidon.

Erfindungsgemäss können auch die bei der Herstellung der Verbindungen der Formeln I und Ia erhaltenen Reaktionslösungen direkt zur Hydrierung eingesetzt werden.

Die N-substituierten Imine können der allgemeinen Formel IV

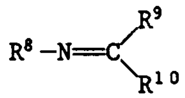

(IV)

entsprechen, worin $R^8$ lineares oder verzweigtes $C_1$-$C_{12}$-Alkyl, Cycloalkyl mit 3 bis 8 Ring-C-Atomen, über ein C-Atom gebundenes Heterocycloalkyl mit 3 bis 8 Ringatomen und 1 oder 2 Heteroatomen aus der Gruppe O, S und $NR^{11}$, ein über ein Alkyl-C gebundenes $C_7$-$C_{16}$-Aralkyl oder mit dem genannten Cycloalkyl oder Heterocycloalkyl oder Heteroaryl substituiertes $C_1$-$C_{12}$-Alkyl bedeutet, oder worin $R^8$ $C_6$-$C_{12}$-Aryl oder über ein Ring-C-Atom gebundenes $C_4$-$C_{11}$-Heteroaryl mit 1 oder 2 Heteroatomen im Ring bedeutet, wobei $R^8$ mit $C_1$-$C_{12}$-Alkyl, $C_1$-$C_{12}$-Alkoxy, $C_1$-$C_{12}$-Alkylthio, $C_1$-$C_6$-Haloalkyl, -OH, $C_6$-$C_{12}$-Aryl oder -Aryloxy oder -Arylthio, $C_7$-$C_{16}$-Aralkyl oder -Aralkoxy oder -Aralkylthio, Sekundäramino mit 2 bis 24 C-Atomen,

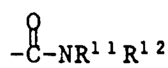

oder $-COOR^{11}$, wobei $R^{11}$ und $R^{12}$ unabhängig voneinander $C_1$-$C_{12}$-Alkyl, Phenyl oder Benzyl oder $R^{11}$ und $R^{12}$ zusammen Tetra- oder Pentamethylen oder 3-Oxapentylen sind, substituiert sein kann, und wobei die Arylreste ihrerseits durch $C_1$-$C_4$-Alkyl, -Alkoxy, -Alkylthio, -OH, $-CONR^{11}R^{12}$ oder $-COOR^{11}$ substituiert sein können;

$R^9$ und $R^{10}$ unabhängig voneinander ein Wasserstoffatom, gegebenenfalls durch -OH, $C_1$-$C_{12}$-Alkoxy, Phenoxy, Benzyloxy, Sekundäramino mit 2 bis bis 24 C-Atomen,

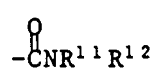

oder $-COOR^{11}$ substituiertes $C_1$-$C_{12}$-Alkyl oder Cycloalkyl mit 3-8 Ring-C-Atomen, gegebenenfalls wie $R^8$ substituiertes $C_6$-$C_{12}$-Aryl oder $C_7$-$C_{16}$-Aralkyl, $-CONR^{11}R^{12}$ oder $-COOR^{11}$ darstellen, worin $R^{11}$ und $R^{12}$ die zuvor angegebenen Bedeutungen haben; oder

$R^8$ die zuvor angegebene Bedeutung hat und $R^9$ und $R^{10}$ zusammen gegebenenfalls durch 1 oder 2 -O-, -S- oder $-NR^9$- unterbrochenes, und/oder gegebenenfalls durch =O oder wie zuvor für $R^9$ und $R^{10}$ in der Bedeutung von Alkyl substituiertes, und/oder mit Benzol, Furan, Thiophen oder Pyrrol kondensiertes Alkylen mit 2 bis 5 C-Atomen sind; oder

$R^9$ die zuvor angegebene Bedeutung hat und $R^{10}$ an $R^8$ gebundenes, gegebenenfalls durch 1 oder 2 -O-, -S- oder $-NR^{11}$- unterbrochenes, und/oder gegebenenfalls durch =O oder wie zuvor für $R^9$ und $R^{10}$ in der Bedeutung von Alkyl substituiertes, und/oder mit Benzol, Furan, Thiophen oder Pyrrol kondensiertes Alkylen mit 2 bis 5 C-Atomen ist.

$R^8$, $R^9$ und $R^{10}$ können in beliebigen Stellungen mit gleichen oder verschiedenen Resten substituiert sein, z.B. mit 1 bis 5, vorzugsweise 1 bis 3 Substituenten.

Geeignete Substituenten für $R^8$ sowie $R^9$ und $R^{10}$ sind:

$C_1$-$C_{12}$-, bevorzugt $C_1$-$C_6$- und besonders $C_1$-$C_4$-Alkyl, -Alkoxy oder -Alkylthio, z.B. Methyl, Ethyl, Propyl, n-, i- und t-Butyl, die Isomeren von Pentyl, Hexyl, Octyl, Nonyl, Decyl, Undecyl und Dodecyl, sowie entsprechende Alkoxy- und Alkylthioreste;

$C_1$-$C_6$-, vorzugsweise $C_1$-$C_4$-Haloalkyl mit vorzugsweise F und Cl als Halogen, z.B. Trifluor- oder Trichlormethyl, Difluorchlormethyl, Fluordichlormethyl, 1,1-Difluoreth-1-yl, 1,1-Dichloreth-1-yl, 1,1,1-Trichlor- oder -Trifluoreth-2-yl, Pentachlorethyl, Pentafluorethyl, 1,1,1-Trifluor-2,2-dichlorethyl, n-Perfluorpropyl, i-Perfluorpropyl, n-Perfluorbutyl, Fluor- oder Chlormethyl, Difluor- oder Dichlormethyl, 1-Fluor- oder -Chlor-eth-2-yl oder -eth-1-yl, 1-, 2-oder 3-Fluor- oder -Chlor-prop-1-yl oder -prop-2-yl oder -prop-3-yl, 1-Fluor- oder -Chlor-but-1-yl, -but-2-yl, -but-3-yl oder -but-4-yl, 2,3-Dichlor-prop-1-yl, 1-Chlor-2-fluor-prop-3-yl, 2,3-Dichlorbut-1-yl; $C_6$-$C_{12}$-Aryl, -Aryloxy oder -Arylthio, in denen Aryl bevorzugt für Naphthyl und besonders Phenyl steht,

$C_7$-$C_{16}$-Aralkyl, -Aralkoxy und -Aralkylthio, in denen der Arylrest bevorzugt Naphthyl und besonders Phenyl ist und der Alkylenrest linear oder verzweigt ist und 1 bis 10, vorzugsweise 1 bis 6 und insbesondere 1-3 C-Atome enthält, z.B. Benzyl, Naphthylmethyl, 1-oder 2-Phenyleth-1-yl oder -eth-2-yl, 1-, 2- oder 3-Phenyl-prop-1-yl, -prop-2-yl oder -prop-3-yl, besonders bevorzugt ist Benzyl;

die zuvor genannten Arylgruppen enthaltende Reste können ihrerseits ein-oder mehrfach substituiert sein, z.B. durch $C_1$-$C_4$-Alkyl, -Alkoxy oder -Alkylthio, Halogen, -OH, -CONR$^{11}$R$^{12}$ oder -COOR$^{11}$, wobei $R^{11}$ und $R^{12}$ die angegebenen Bedeutungen haben; Beispiele sind Methyl, Ethyl, n- und i-Propyl, Butyl, entsprechende Alkoxy- und Alkylthioreste, F, Cl, Br, Dimethyl-, Methylethyl-, Diethylcarbamoyl, Methoxy-, Ethoxy-, Phenoxy-und Benzyloxycarbonyl;

Halogen, bevorzugt F und Cl;

Sekundäramino mit 2 bis 24, vorzugsweise 2 bis 12 und besonders 2 bis 6 C-Atomen, wobei das Sekundäramino bevorzugt 2 Alkylgruppen enthält, z.B. Dimethyl-, Methylethyl-, Diethyl-, Methylpropyl, -Methyl-n-butyl-, Di-n-Propyl-, Di-n-Butyl-, Di-n-Hexylamino;

-CONR$^{11}$R$^{12}$, worin $R^{11}$ und $R^{12}$ unabhängig voneinander $C_1$-$C_{12}$-, vorzugsweise $C_1$-$C_6$- und insbesondere $C_1$-$C_4$-Alkyl oder $R^{11}$ und $R^{12}$ zusammen Tetra- oder Pentamethylen oder 3-Oxapentylen sind, wobei das Alkyl linear oder verzweigt sein kann, z.B. Dimethyl-, Methylethyl-, Diethyl-, Methyl-n-propyl-, Ethyl-n-propyl-, Di-n-propyl-, Methyl-n-butyl-, Ethyl-n-butyl-, n-Propyl-n-butyl- und Di-n-butylcarbamoyl;

-COOR$^{11}$, worin $R^{11}$ $C_1$-$C_{12}$-, bevorzugt $C_1$-$C_6$-Alkyl ist, das linear oder verzweigt sein kann, z.B. Methyl, Ethyl, n- und i-Propyl, n-, i- und t-Butyl, und die Isomeren von Pentyl, Hexyl, Heptyl, Octyl, Nonyl, Decyl, Undecyl und Dodecyl.

$R^8$, $R^9$ und $R^{10}$ können insbesondere funktionelle Gruppen wie z.B. Ketogruppen, -CN, -$NO_2$, Kohlenstoffdoppelbindungen, N-O, aromatische Halogengruppen sowie Amidgruppen enthalten.

$R^8$ als Aryl ist bevorzugt unsubstituiertes oder substituiertes Naphthyl und besonders Phenyl. $R^8$ als Heteroaryl ist bevorzugt ein 5- oder 6-gliedriger Ring mit 1 oder 2 gleichen oder verschiedenen Heteroatomen, besonders O, S oder N, das bevorzugt 4 oder 5 C-Atome enthält und das mit Benzol kondensiert sein kann. Beispiele für Heteroaromaten, von denen sich $R^8$ ableiten kann, sind Furan, Pyrrol, Thiophen, Pyridin, Pyrimidin, Indol und Chinolin.

$R^8$ als mit Heteroaryl substituiertes Alkyl leitet sich bevorzugt von einem 5- oder 6-gliedrigen Ring mit 1 oder 2 gleichen oder verschiedenen Heteroatomen, besonders O, S oder N ab, das bevorzugt 4 oder 5 C-Atome enthält und das mit Benzol kondensiert sein kann. Beispiele für Heteroaromaten sind Furan, Pyrrol, Thiophen, Pyridin, Pyrimidin, Indol und Chinolin.

$R^8$ als Heterocycloalkyl oder als mit Heterocycloalkyl substituiertes Alkyl enthält bevorzugt 4 bis 6 Ringatome und 1 oder 2 gleiche oder verschiedene Heteroatome aus der Gruppe O, S und NR$^{11}$. Es kann mit Benzol kondensiert sein. Es kann sich z.B. von Pyrrolidin, Tetrahydrofuran, Tetrahydrothiophen, Indan, Pyrazolidin, Oxazolidin, Piperidin, Piperazin oder Morpholin ableiten.

$R^8$, $R^9$ und $R^{10}$ als Alkyl sind bevorzugt unsubstituiertes oder substituiertes $C_1$-$C_6$-, besonders $C_1$-$C_4$-Alkyl, das linear oder verzweigt sein kann. Beispiele sind Methyl, Ethyl, i- und n-Propyl, i-, n- und t-Butyl, die Isomeren von Pentyl, Hexyl, Heptyl, Octyl, Nonyl, Decyl, Undecyl und Dodecyl.

$R^8$, $R^9$ und $R^{10}$ als unsubstituiertes oder substituiertes Cycloalkyl enthalten bevorzugt 3 bis 6, besonders 5 oder 6 Ring-C-Atome. Beispiele sind Cyclopropyl, Cyclobutyl, Cyclopentyl, Cyclohexyl, Cycloheptyl und Cyclooctyl.

$R^8$ , $R^9$ und $R^{10}$ als Aryl sind bevorzugt unsubstituiertes oder substituiertes Naphthyl und besonders Phenyl. $R^8$, $R^9$ und $R^{10}$ als Aralkyl sind bevorzugt unsubstituiertes oder substituiertes Phenylalkyl mit 1-10, bevorzugt 1 bis 6 und besonders 1 bis 4 C-Atomen im Alkylen, wobei das Alkylen linear oder verzweigt sein kann. Beispiele sind besonders Benzyl, sowie 1-Phenyleth-1-yl, 2-Phenyleth-1-yl, 1-Phenylprop-1-yl, 1-Phenylprop-2-yl, 1-Phenylprop-3-yl, 2-Phenylprop-1-yl, 2-Phenylprop-2-yl und 1-Phenylbut-4-yl.

In $R^9$ und $R^{10}$ als $-CONR^{11}R^{12}$ und $-COOR^{11}$ stellen $R^{11}$ und $R^{12}$ bevorzugt $C_1$-$C_6$-, besonders $C_1$-$C_4$-Alkyl oder $R^{11}$ und $R^{12}$ zusammen Tetramethylen, Pentamethylen oder 3-Oxapentylen dar. Beispiele für Alkyl sind zuvor erwähnt worden.

$R^9$ und $R^{10}$ zusammen oder an $R^8$ gebundenes $R^{10}$ als Alkylen sind bevorzugt durch 1 -O-, -S- oder $-NR^{11}$-, vorzugsweise -O-, unterbrochen. $R^9$ und $R^{10}$ zusammen bzw. an $R^8$ gebundenes $R^{10}$ bilden mit dem C-Atom bzw. mit der -N=C-Gruppe, an das sie gebunden sind, bevorzugt einen 5-oder 6-gliedrigen Ring. Für die Substituenten gelten die zuvor erwähnten Bevorzugungen. Als kondensiertes Alkylen sind $R^9$ und $R^{10}$ zusammen bzw. an $R^8$ gebundenes $R^{10}$ bevorzugt mit Benzol oder Pyridin kondensiertes Alkylen. Beispiele für Alkylen sind: Ethylen, 1,2-oder 1,3-Propylen, 1,2-, 1,3- oder 1,4-Butylen, 1,5-Pentylen und 1,6-Hexylen. Beispiele für unterbrochenes oder durch =O substituiertes Alkylen sind 2-Oxa-1,3-propylen, 2-Oxa-1,4-butylen, 2-Oxa-oder 3-Oxa-1,5-pentylen, 3-Thia-1,5-pentylen, 2-Thia-1,4-butylen, 2-Thia-1,3-propylen, 2-Methylimino-1,3-propylen, 2-Ethylimino-1,4-butylen, 2- oder 3-Methylimino-1,5-pentylen, 1-Oxo-2-oxa-1,3-propylen, 1-Oxo-2-oxa-1,4-butylen, 2-Oxo-3-oxa-1,4-butylen, 1-Oxa-2-oxo-1,5-pentylen. Beispiele für kondensiertes Alkylen sind:

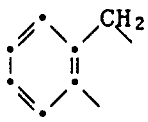 , 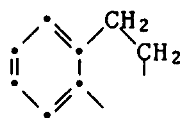 , 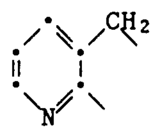 und 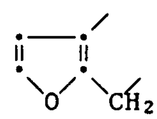 .

Beispiele für kondensiertes und unterbrochenes und gegebenenfalls mit =O substituiertes Alkylen sind

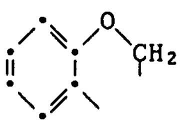 , 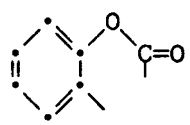 und 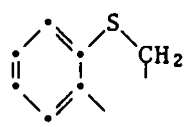 .

In einer bevorzugten Gruppe steht in Formel IV $R^8$ für 2,6-Dimethylphen-1-yl oder 2-Methyl-6-ethylphen-1-yl, $R^9$ für Methyl und $R^{10}$ für Methoxymethyl.

Eine weitere bevorzugte Gruppe sind prochirale Imine, bei den $R^9$ und $R^{10}$ voneinander verschieden sind und nicht Wasserstoff bedeuten.

Imine der Formel IV sind bekannt oder sie können nach bekannten Verfahren aus Aldehyden oder Ketonen und primären Aminen hergestellt werden. In einer Ausführungsform des Verfahrens können die Imine der Formel IV auch in situ hergestellt werden.

Die erfindungsgemäss herstellbaren Amine sind biologisch aktive Substanzen oder Zwischenprodukte zur Herstellung solcher Substanzen, insbesondere im Bereich der Herstellung von Pharmazeutika und Agrochemikalien. So wirken z.B. o,o-Dialkylarylketaminderivate, insbesondere solche mit Alkyl- und/oder Alkoxyalkylgruppen, als Fungizide, besonders als Herbizide. Bei den Derivaten kann es sich um Aminsalze, Säureamide, z.B. von Chloressigsäure, tertiäre Amine und Ammoniumsalze handeln (siehe z.B. EP-A-0 077 755 und EP-A-01 15 470).

Die nachfolgenden Beispiele erläutern die Erfindung näher.

## Herstellungsbeispiele

### Beispiel 1:

Unter Argonatmosphäre werden 600 mg (0,67 mmol) [Ir (COD) (DIOP)]$BF_4$ in 10 ml Aceton gelöst und mit 900 mg (6,7 mmol) LiI versetzt. Diese Reaktionsmischung wird während 20 h bei Rückflusstemperatur gerührt, wobei ein gelber Niederschlag ausfällt. Die auf Raumtemperatur abgekühlte Reaktionslösung wird zentrifugiert. Das gelbe Produkt wird abgetrennt, mit 5 ml Aceton gewaschen und anschliessend getrocknet. Der feste Rückstand wird mit 10 ml $CH_2Cl_2$ extrahiert. Die Methylenchloridphase wird bei Raumtemperatur stehen gelassen, wobei weisse Kristalle von LiI ausfallen. Nach Filtration wird die gelbe Lösung mit 10 ml Diethylether versetzt, und innerhalb eines Tages bilden sich 317 mg schwach gelbe Kristalle. Durch eine weitere Umkristallisation der Mutterlauge erhält man insgesamt 375 mg (58 %) [Ir (DIOP)$HI_2$$]_2$.
Elementaranalyse, gefunden (berechnet): C 39,7 (39,38), H 3,7 (3,52) P 7,4 (6,55), I 26,3 (26,80).
$^1$H-NMR ($CD_2Cl_2$, 200 MHz, Hydrid-Region):

-16,2 ppm (t, $^2J_{PH}$: 11 Hz), -11,7 ppm (t, $^2J_{PH}$: 11 Hz).

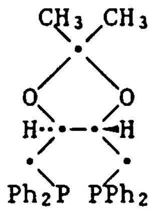

(+)-DIOP, COD = Cyclooctadien,
Ph = Phenyl

Beispiel 2:

Analog Beispiel 1 erhält man unter Verwendung von 500 mg (0,6 mmol) [Ir (COD) (BDPP)]$BF_4$ 340 mg (64 %) [Ir (BDPP)$HI_2$]$_2$.

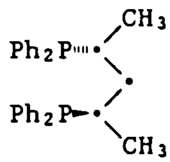

BDPP.

Beispiel 3:

Analog Beispiel 1 erhält man unter Verwendung von 510 mg (0,6 mmol) [Ir (COD) (NORPHOS)]$BF_4$ 283 mg (52 %) [Ir (NORPHOS)$HI_2$]$_2$.

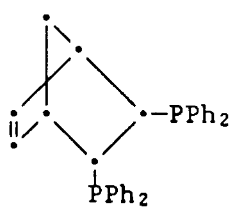

(+)-NORPHOS

Beispiel 4:

Analog Beispiel 1 erhält man aus 1,5 g (1.85 mmol) [Ir (COD) (CHIRAPHOS)]$BF_4$ mit 8 g (60 mmol) LiI 180 mg(10 %) [Ir (CHIRAPHOS)$I_3$]$_2$.

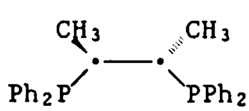

CHIRAPHOS

Elementaranalyse (gefunden/berechnet in %): C 33,8/33,65; H 2,9/2,82; I 37,0 (38,1); P 6,2/6,2.

Beispiel 5:

Eine Lösung von 150 mg (0,19 mmol) [Ir(COD) (R-PROPHOS)]$BF_4$ in 3 ml Aceton wird bei Rückflusstemperatur mit 400 g (2,98 mmol) LiI während 2 Stunden umgesetzt. Nach 2 weiteren Stunden bei Raumtemperatur werden 10 ml Diethylether zur tiefroten Lösung gegeben, worauf sich zwei Phasen bilden und weisse LiI-Kristalle ausfallen. Das Gemisch wird filtriert und die rote ölige Phase dekantiert. Diese wird

anschliessend in 8 ml eines Tetrahydrofuran/Diethylether-Gemisches (5:3) gelöst, und nach 3 Tagen Stehenlassen bei Raumtemperatur erhält man 40 mg mikrokristallines, oranges $[Ir(R\text{-}PROPHOS)I_4]Li$. Nach der Filtration wird die Mutterlauge eine Woche stehen gelassen und man erhält weitere 30 mg des Salzes (Ausbeute: 33 %).

COD = Cyclooctadien
Ph = Phenyl

$$R\text{-}PROPHOS = Ph_2P\text{-}CH_2\text{-}\overset{CH_3}{\overset{|}{C}}H\text{-}PPh_2$$

Beispiel 6:

$[Ir(COD)(DPPE)]BF_4$ (700 mg; 1,12 mmol) werden in 10 ml Aceton gelöst, mit LiI (5,0 g; 37 mmol) versetzt und anschliessend während 3 Stunden bei Rückflusstemperatur gerührt. Dabei entsteht eine rote Reaktionslösung, zu welcher 10 ml Aceton zugefügt werden. Die Lösung wird auf Raumtemperatur abgekühlt und nach 2 Tagen Stehenlassen wird $[Ir(DPPE)I_4]Li$ isoliert. Die Mutterlauge wird während 5 Tagen stehen gelassen und man erhält weitere 200 mg des roten Salzes.
$^1H$-NMR: 8,30 ppm und 7,18 ppm, m (20 H); 3,04 ppm, d, J = 16 Hz (4H).
DPPE = 1,2-Bis-(diphenylphosphin)ethan.

Beispiel 7:

Beispiel 6 wird wiederholt aber 20 Stunden am Rückfluss erhitzt. Nach 2 Tagen Stehenlassen erhält man 580 mg $[Ir(DPPE)I_4]Li$

Zur Mutterlauge werden 15 ml Methanol zugefügt. Der gebildete kristalline Niederschlag besteht aus 283 mg $[Ir(DPPE)HI_2]_2$

Anwendungsbeispiele:

Beispiel 8:

15 mg ($7{,}9 \cdot 10^{-3}$ mmol) Verbindung gemäss Beispiel 1 werden in 2,5 ml Methylenchlorid und 7,5 ml Tetrahydrofuran (THF) gelöst. 1,5 g (7,84 mmol) N-(2,6-Dimethylphen-1-yl)-methyl-methoxymethyl-ketimin werden dazugegeben, und die Lösung anschliessend in den auf 30 °C thermostatierten Autoklaven transferiert. In drei Spülzyklen werden jeweils $2 \cdot 10^6$ Pa Wasserstoff aufgepresst. Schliesslich werden unter Rühren $4 \cdot 10^6$ Pa Wasserstoff aufgepresst. Die Hydrierung wird durch Registrieren der Wasserstoffaufnahme verfolgt. Nach 11 h ist die Umsetzung vollständig, der Wasserstoff wird entspannt und die Lösung in einen Kolben transferiert. Das Lösungsmittel wird am Rotationsverdampfer entfernt. Der Rückstand wird am Hochvakuum destilliert, wobei ein gelber Niederschlag zurückbleibt, der als $[Ir(DIOP)HI_2]_2$ identifiziert wird. Man erhält (2,6-Dimethylphen-1-yl)-(1-methoxy-prop-2-yl)amin mit einer Ausbeute >99 % und einer optischen Ausbeute ee = 54 % (S-Konfiguration).

Die optische Ausbeute wird mittels Polarimetrie bestimmt

$$([\alpha]^{20}_{365} = -130{,}6°,$$

C = 3 in Hexan, S-Enantiomer).

Beispiele 9-13:

Es wird analog Beispiel 8 verfahren. Die Reaktionsbedingungen und Ausbeuten sind in Tabelle 1 angegeben. Die Reaktionstemperatur beträgt in den Beispielen 8-11 25 °C, im Beispiel 12 30 °C.

Tabelle 1

| Beispiel | Katalysator | Molverhältnis Imin:Katalysator | $H_2$-Druck ($10^6$ Pa) | Lösungsmittel | Reakstionszeit (h) | Ausbeute (%) | ee (Konfiguration) |
|---|---|---|---|---|---|---|---|
| 9 | Beispiel 1 | 2000 | 10 | THF/$CH_2CCl_2$ (3:1) | 40 | 99 | 63(S) |
| 10 | Beispiel 2 | 100 | 2,5 | $CH_2Cl_2$ | 24 | 99 | 29(R) |
| 11 | Beispiel 3 | 100 | 2,5 | $CH_2Cl_2$ | 24 | 100 | 43(R) |
| 12 | Beispiel 4 | 380 | 4 | $CH_2Cl_2$ | 40 | 95 | 42(R) |
| 13[1)] | Beispiel 1 | 500 | 4 | THF/$CH_2CCl_2$ (3:1) | 6 | 100 | 62(S) |

[1)]Zusätzlich $1{,}58 \cdot 10^{-2}$ mmol LiCl.

Beispiel 14:

13,6 g ($1,23 \cdot 10^{-2}$ mmol) $[Ir(DPPE)I_4]Li$ werden unter Inertgas (Argon) in 10 ml eines Lösungsmittelgemisches aus Tetrahydrofuran/$CH_2Cl_2$ (3:1) gelöst. Anschliessend werden 0,28 g (1,23 mmol) N-(4-Nitrophenyl)benzylidenimin eingetragen. Die Substrat/Katalysator-Lösung wird in einen 50 ml Stahlautoklaven transferiert. Nach dem Spülen mit Wasserstoffgas werden $2,5 \cdot 10^6$ Pa Wasserstoff aufgepresst und der Autoklav in einem Oelbad auf 30 °C erwärmt.

Nach 2 h ist die Umsetzung vollständig und die Reaktionslösung wird analysiert. Man erhält in 100 % Ausbeute N-(4-Nitrophenyl)benzylamin.

Beispiele 15 bis 18:

Analog Beispiel 14 werden die in Tabelle 2 angegebenen Imine hydriert, jedoch 20 ml Lösungsmittel verwendet.

Tabelle 2

Hydrierung von 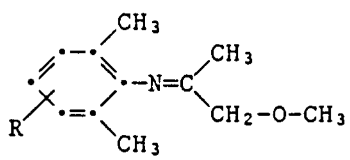

| Beispiel | R | Reaktionszeit (h) | Ausbeute (%) |
|---|---|---|---|
| 15 | $-NO_2$ | 7 | 100 |
| 16 | $-\overset{O}{\overset{\|}{C}}-CH_3$ | 15 | 100 |
| 17 | 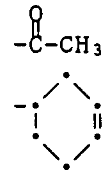 | 15 | 100 |
| 18 | -CN | 20 | 99,5 |

Beispiel 19:

5,6 g $[Ir(COD)Cl]_2$, 8,6 mg (+)-DIOP und 58,4 mg $(n\text{-}Butyl)_4NI$ werden unter Argonatmosphäre in einem Schlenkgefäss in 7,5 ml Tetrahydrofuran gelöst und anschliessend mit einer Stahlkapilare in einen 50 ml Stahlautoklaven übergeführt. Die Lösung wird 6 Stunden bei 60 °C gerührt und dann auf Raumtemperatur abgekühlt. Darauf wird eine Lösung aus 1,5 g N-(2,6-Dimethylphen-1-yl)-methyl-methoxymethyl-ketimin in 2,5 ml Methylenchloridzugegeben und gemäss Beispiel 8 hydriert. Nach 16 h Hydrierzeit wird bei einem Umsatz von >99 % das gewünschte Amin mit 54,7 % optischer Ausbeute isoliert.

## Patentansprüche

1. Verbindungen der allgemeinen Formeln I oder Ia oder deren Gemische

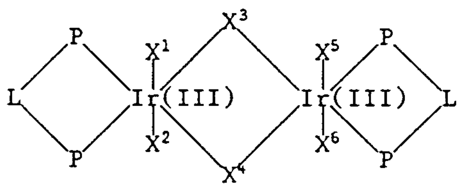 (I),

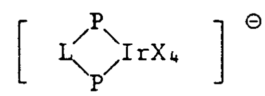 $M^{\oplus}$ (Ia),

worin
die Gruppen P-L-P einen Liganden aus der Gruppe ditertiäres Diphosphin oder Diphosphinit bedeuten, deren Phosphingruppen oder Phosphinitgruppen P über 2 bis 4 C-Atome verknüpft sind, und die mit den Ir-Atomen einen 5-, 6- oder 7-gliedrigen Ring bilden, X, $X^1$, $X^2$, $X^3$, $X^4$, $X^5$ und $X^5$ unabhängig voneinander Cl, Br oder I darstellen, oder $X^1$ und $X^5$ für H und $X^2$, $X^3$, $X^4$ und $X^5$ unabhängig voneinander für Cl, Br oder I stehen, oder $X^1$ und $X^5$ für H und $X^2$, $X^3$, $X^4$ und $X^5$ unabhängig voneinander für Cl, Br oder I stehen, und $M^{\oplus}$ für ein Alkalimetallkation oder quaternäres Ammonium steht.

2. Verbindungen gemäss Anspruch 1, worin die Phosphin- und Phosphinitgruppen zwei gleiche oder verschiedene Reste aus der Gruppe linearem oder verzweigtem $C_1$-$C_{12}$-Alkyl, unsubstituiertem oder mit $C_1$-$C_6$-Alkyl substituiertem $C_5$-$C_8$-Cycloalkyl, Phenyl oder Benzyl, oder mit $C_1$-$C_6$-Alkoxy, $(C_1$-$C_6$-Alkyl$)_2N$-, F, $-SO_3H$, $-SO_3Na$ oder -COO-$C_1$-$C_6$-Alkyl substituiertes Phenyl oder Benzyl enthalten.

3. Verbindungen gemäss Anspruch 2, worin die Phosphin- und Phosphinitgruppen je zwei Phenylgruppen enthalten.

4. Verbindungen gemäss Anspruch 1, worin L in der Gruppe P-L-P unsubstituiertes oder mit $C_1$-$C_6$-Alkyl, $C_5$- oder $C_6$-Cycloalkyl, Phenyl, Naphthyl oder Benzyl substituiertes lineares $C_2$-$C_4$-Alkylen; 1,2- oder 1,3-Cycloalkylen oder -Cycloalkenylen, -Bicycloalkylen oder -Bicycloalkenylen mit 4 bis 10 C-Atomen, die unsubstituiert oder mit $C_1$-$C_6$-Alkyl, Phenyl oder Benzyl substituiert sind; oder solche cyclischen Reste, die in den 1- und/oder 2-Stellungen oder die in der 3-Stellung Methylen oder $C_2$-$C_4$-Alkyliden enthalten; in 2,3-Stellung mit

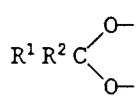

substituiertes 1,4-Butylen, das in den 1,4-Stellungen unsubstituiert oder mit $C_1$-$C_6$-Alkyl, Phenyl oder Benzyl substituiert ist, wobei $R^1$ und $R^2$ unabhängig voneinander H, $C_1$-$C_6$-Alkyl, Phenyl oder Benzyl bedeutet; 3,4-oder 2,4-Pyrrolidinylen oder 2-Methylen-pyrrolidin-4-yl, deren N-Atom mit der Gruppe $R^3$ gleich H, $C_1$-$C_{12}$-Alkyl, Phenyl, Benzyl, $C_1$-$C_{12}$-Alkoxycarbonyl, $C_1$-$C_8$-Acyl oder $C_1$-$C_{12}$-Alkylaminocarbonyl substituiert ist; 1,2-Phenylen, 2-Benzylen, 1,2-Xylylen, 1,8-Naphthylen, 2,2'-Dinaphthylen oder 2,2'-Diphenylen, die unsubstituiert oder mit $C_1$-$C_4$-Alkyl substituiert sind, darstellt; und P in der Gruppe P-L-P eine sekundäre Phosphingruppe oder Phosphinitgruppe bedeutet.

5. Verbindungen gemäss Anspruch 1, worin L in der Gruppe P-L-P der Dioxylrest eines geschützten Mono- oder Disaccharids ist und die P für einen einwertigen sekundären Phosphinrest stehen.

6. Verbindungen gemäss Anspruch 1, worin die Gruppen P-L-P für ein Enantiomeres oder Diastereoisomeres eines ditertiären Diphosphins oder Diphosphinits stehen.

**7.** Verbindungen gemäss Anspruch 1, worin die Gruppe P-L-P den Formeln

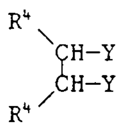 , 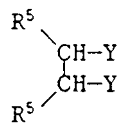 , 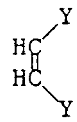 , 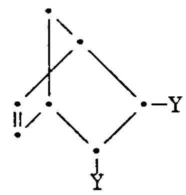 ,

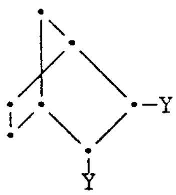 , 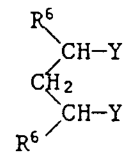 , 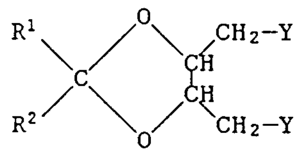 ,

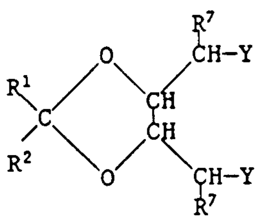 , 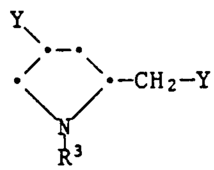 , 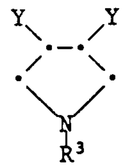 oder

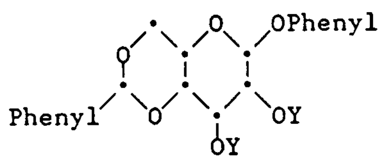 .

entspricht, wobei Y -P(Phenyl)$_2$ bedeutet, $R^4$, $R^5$ und $R^6$ H, $C_1$-$C_4$-Alkyl, Cyclohexyl, Phenyl oder Benzyl darstellen, $R^1$ und $R^2$ H, $C_1$-$C_4$-Alkyl, Phenyl oder Benzyl und $R^7$ H oder $C_1$-$C_4$-Alkyl sind, und $R^3$ für H, $C_1$-$C_4$-Alkyl, Phenyl, Benzyl, $C_1$-$C_6$-Alkoxy-CO-, $C_1$-$C_6$-Alkyl-CO-, Phenyl-CO-, Naphthyl-CO- oder $C_1$-$C_4$-AlkylNH-CO- steht.

**8.** Verbindungen gemäss Anspruch 7, worin die Gruppe P-L-P der Formel

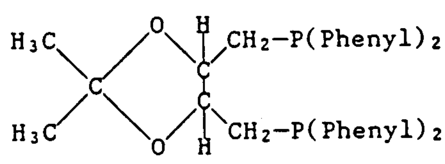

entspricht.

**9.** Verbindungen gemäss Anspruch 1, worin in Formel I $X^1$ und $X^6$ für H stehen und $X^2$ bis $X^6$ je für Cl, Br oder I stehen oder $X^1$ und $X^6$ für H stehen und $X^2$, $X^3$, $X^4$ und $X^6$ je für Cl, Br oder I stehen.

**10.** Verbindungen gemäss Anspruch 9, worin in Formel I $X^2$ bis $X^6$ oder $X^2$, $X^3$, $X^4$ und $X^6$ je für I stehen.

**11.** Verbindungen gemäss Anspruch 1, worin in Formel I $X^1$ bis $X^6$ je für Cl, Br oder I stehen.

**12.** Verbindungen gemäss Anspruch 11, worin in Formel I $X^1$ bis $X^6$ je für I stehen.

**13.** Verbindungen gemäss Anspruch 1, worin in Formel Ia die vier X für Cl, Br, oder I stehen.

**14.** Verbindungen gemäss Anspruch 13, worin in Formel Ia die vier X je für I stehen.

**15.** Verbindungen gemäss Anspruch 1, worin in Formel Ia $M^{\oplus}$ für $Li^{\oplus}$, $Na^{\oplus}$,$K^{\oplus}$ oder ($C_1$-$C_6$-Alkyl)$_4$$N^{\oplus}$ steht.

**16.** Verfahren zur Herstellung von Verbindungen der Formel I, Ia oder deren Gemische, gemäss Anspruch 1, dadurch gekennzeichnet, dass man bei erhöhter Temperatur in einem Keton als Lösungsmittel eine Verbindung der Formel II

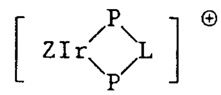 $A^{\ominus}$ (II),

worin Z für zwei Olefinliganden oder einen Dienliganden steht, $A^{\ominus}$ das Anion einer Sauerstoffsäure oder Komplexsäure darstellt und die Gruppe P-L-P die in Anspruch 1 angegebene Bedeutung hat, mit einem Ueberschuss eines Salzes der Formel III

$M^{\oplus}X^{\ominus}$ (III),

worin $M^{\oplus}$ für ein Alkalimetall oder quaternäres Ammonium steht und X Cl, Br oder I bedeutet, oder mit Mischungen dieser Salze umsetzt.

**17.** Verwendung von Verbindungen der Formeln I, Ia oder deren Gemische gemäss Anspruch 1 als homogene Katalysatoren zur Hydrierung von N-substituierten Iminen.

**18.** Verwendung gemäss Anspruch 17, worin in Formel I und Ia die Gruppe P-L-P ein Enantiomer oder Diastereomer eines ditertiären Diphosphins oder Diphosphinits ist, zur asymmetrischen Hydrierung von N-substituierten prochiralen Iminen.

**19.** Verfahren zur Herstellung von sekundären Aminen durch Hydrierung von N-substituierten Iminen mit Wasserstoff bei einer Temperatur von -20 bis 80 °C und einem Wasserstoffdruck von $10^5$ bis $5 \cdot 10^7$ Pa in Gegenwart eines Iridiumkomplexes als homogener Katalysator, dadurch gekennzeichnet, dass man als Katalysator eine Verbindung der Formeln I, Ia oder deren Gemische gemäss Anspruch 1 einsetzt.

**20.** Verfahren gemäss Anspruch 19 zur Herstellung von optisch aktiven sekundären Aminen, dadurch gekennzeichnet, dass in Formel I und Ia die Gruppe P-L-P ein Enantiomer oder Diastereomer eines ditertiären Diphosphins oder Diphosphinits darstellt und ein prochirales N-substituiertes Imin eingesetzt wird.

## Claims

**1.** A compound of general formula I or Ia

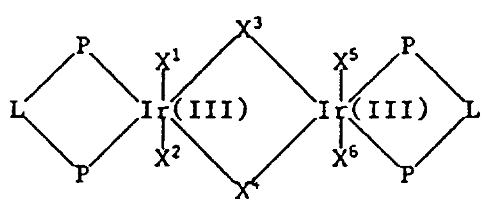 (I),

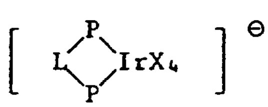 $M^{\oplus}$ (Ia),

or mixture thereof, wherein the groups P-L-P are a ligand from the group consisting of ditertiary

diphosphine and diphosphinite, in which the phosphine groups or phosphinite groups P are coupled via 2 to 4 C atoms, and which form a 5-, 6- or 7-membered ring with the Ir atoms, X, $X^1$, $X^2$, $X^3$, $X^4$, $X^5$ and $X^5$ independently of one another are Cl, Br or I, or $X^1$ and $X^5$ are H and $X^2$, $X^3$, $X^4$ and $X^5$ independently of one another are Cl, Br or I, or $X^1$ and $X^5$ are H and $X^2$, $X^3$, $X^4$ and $X^5$ independently of one another are Cl, Br or I, and $M^{\oplus}$ is an alkali metal cation or quaternary ammonium.

**2.** A compound according to claim 1, wherein the phosphine and phosphinite groups contain two identical or different radicals from the group consisting of linear or branched $C_1$-$C_{12}$alkyl, unsubstituted or $C_1$-$C_6$alkyl-substituted $C_5$-$C_8$cycloalkyl, phenyl or benzyl, and phenyl or benzyl substituted by $C_1$-$C_6$alkoxy, $(C_1$-$C_6$alkyl$)_2$N-, F, $-SO_3H$, $-SO_3Na$ or -COO-$C_1$-$C_6$alkyl.

**3.** A compound according to claim 2, wherein the phosphine and phosphinite groups each contain two phenyl groups.

**4.** A compound according to claim 1, wherein L in the group P-L-P is linear $C_2$-$C_4$alkylene which is unsubstituted or substituted by $C_1$-$C_6$alkyl, $C_5$- or $C_6$-cycloalkyl, phenyl, naphthyl or benzyl; 1,2- or 1,3-cycloalkylene or -cycloalkenylene, -bicycloalkylene or -bicycloalkenylene having 4 to 10 C atoms, which are unsubstituted or substituted by $C_1$-$C_6$alkyl, phenyl or benzyl; or those cyclic radicals which contain methylene or $C_2$-$C_4$alkylidene in the 1- and/or 2-positions or in the 3-position; 1,4-butylene which in the 2,3-position is substituted by

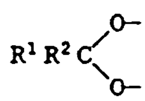

and in the 1,4-positions is unsubstituted or substituted by $C_1$-$C_6$alkyl, phenyl or benzyl, $R^1$ and $R^2$ independently of each other being H, $C_1$-$C_6$alkyl, phenyl or benzyl; 3,4- or 2,4-pyrrolidinylene or 2-methylene-pyrrolidin-4-yl, the N atom of which is substituted by the group $R^3$, $R^3$ being H, $C_1$-$C_{12}$alkyl, phenyl, benzyl, $C_1$-$C_{12}$alkoxycarbonyl, $C_1$-$C_8$acyl or $C_1$-$C_{12}$alkylaminocarbonyl; or 1,2-phenylene, 2-benzylene, 1,2-xylylene, 1,8-naphthylene, 2,2'-dinaphthylene or 2,2'-diphenylene, which are unsubstituted or substituted by $C_1$-$C_4$alkyl; and P in the group P-L-P is a secondary phosphine group or phosphinite group.

**5.** A compound according to claim 1, wherein L in the group P-L-P is the dioxyl radical of a protected mono- or disaccharide and the groups P are a monovalent secondary phosphine radical.

**6.** A compound according to claim 1, wherein the groups P-L-P are an enantiomer or diastereomer of a ditertiary diphosphine or diphosphinite.

7. A compound according to claim 1, wherein the group P-L-P has the formula

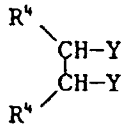 , 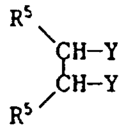 , 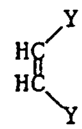 , 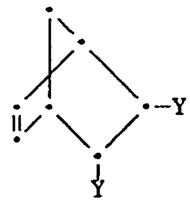 ,

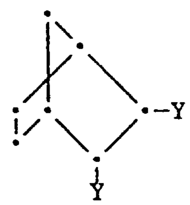 , 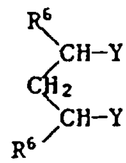 , 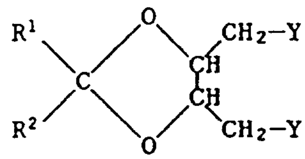 ,

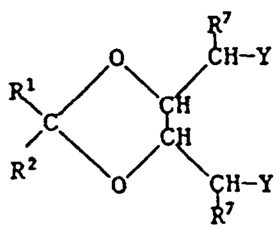 , 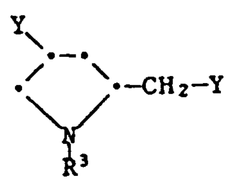 , 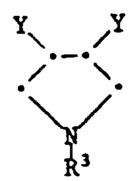 or

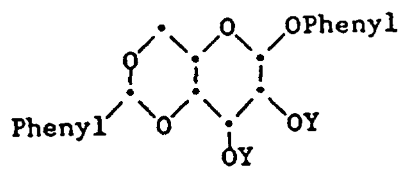 .

Y being -P(phenyl)$_2$, $R^4$, $R^5$ and $R^6$ being H, $C_1$-$C_4$alkyl, cyclohexyl, phenyl or benzyl, $R^1$ and $R^2$ being H, $C_1$-$C_4$alkyl, phenyl or benzyl, $R^7$ being H or $C_1$-$C_4$alkyl and $R^3$ being H, $C_1$-$C_4$alkyl, phenyl, benzyl, $C_1$-$C_6$alkoxy-CO-, $C_1$-$C_6$alkyl-CO-, phenyl-CO-, naphthyl-CO- or $C_1$-$C_4$alkyl-NH-CO-.

8. A compound according to claim 7, wherein the group P-L-P has the formula

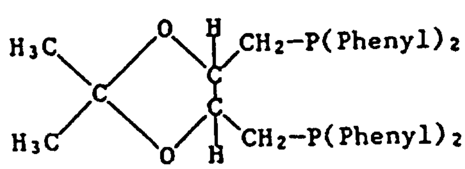 .

9. A compound according to claim 1, wherein, in formula I, $X^1$ and $X^6$ are H and $X^2$ to $X^6$ are each Cl, Br or I, or $X^1$ and $X^6$ are H and $X^2$, $X^3$, $X^4$ and $X^6$ are each Cl, Br or I.

10. A compound according to claim 9, wherein, in formula I, $X^2$ to $X^6$ or $X^2$, $X^3$, $X^4$ and $X^6$ are each I.

11. A compound according to claim 1, wherein, in formula I, $X^1$ to $X^6$ are each Cl, Br or I.

12. A compound according to claim 11, wherein, in formula I, $X^1$ to $X^6$ are each I.

13. A compound according to claim 1, wherein, in formula Ia, the four radicals X are Cl, Br or I.

**14.** A compound according to claim 13, wherein, in formula Ia, the four radicals X are each I.

**15.** A compound according to claim 1, wherein, in formula Ia, $M^{\oplus}$ is $Li^{\oplus}$, $Na^{\oplus}$, $K^{\oplus}$ or $(C_1\text{-}C_6\,alkyl)_4N^{\oplus}$.

**16.** A process for the preparation of a compound of formula I or Ia or mixture thereof, according to claim 1, which comprises reacting a compound of formula II

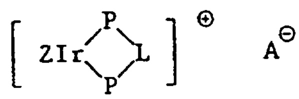

(II),

wherein Z is two olefin ligands or one diene ligand, $A^{\ominus}$ is the anion of an oxygen acid or complex acid and the group P-L-P is as defined in claim 1, at elevated temperature, in a ketone as solvent, with an excess of a salt of formula III

$M^{\oplus}X^{\ominus}$ (III),

wherein $M^{\oplus}$ is an alkali metal or quaternary ammonium and X is Cl, Br or I, or with mixtures of these salts.

**17.** Use of a compound of formula I or Ia or mixture thereof, according to claim 1, as a homogeneous catalyst for the hydrogenation of N-substituted imines.

**18.** Use according to claim 17, wherein, in formulae I and Ia, the group P-L-P is an enantiomer or diastereomer of a ditertiary diphosphine or diphosphinite, for the asymmetric hydrogenation of N-substituted prochiral imines.

**19.** A process for the preparation of secondary amines by hydrogenation of N-substituted imines with hydrogen at a temperature from -20 to 80 °C and a hydrogen pressure of $10^5$ to $5 \cdot 10^7$ Pa, in the presence of an iridium complex as homogeneous catalyst, wherein the catalyst used is a compound of formula I or Ia or a mixture thereof, according to claim 1.

**20.** A process according to claim 19 for the preparation of optically active secondary amines, wherein, in formulae I and Ia, the group P-L-P is an enantiomer or diastereomer of a ditertiary diphosphine or diphosphinite and a prochiral N-substituted imine is used.

## Revendications

**1.** Composés de formules générales I et Ia et mélanges de ces composés

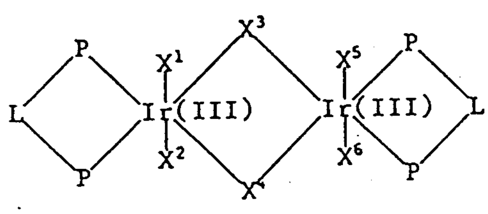

(I)

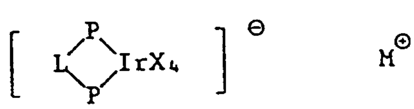

(Ia)

formules dans lesquelles
les groupes P-L-P représentent des ligands de la catégorie de diphosphines et de diphosphinites

ditertiaires, dont les groupes de phosphines ou de phosphinites P sont reliés par 2 à 4 atomes de carbone et qui forment avec les atomes d'iridium des cycles à 5, 6 ou 7 chaînons, $X^1$, $X^2$, $X^3$, $X^4$, $X^5$ et $X^5$ représentent chacun indépendamment les uns des autres le chlore, le brome ou l'iode, ou bien $X^1$ et $X^5$ l'hydrogène et $X^2$, $X^3$, $X^4$ et $X^5$ le chlore, le brome ou l'iode, ou encore $X^1$ et $X^5$ l'hydrogène et $X^2$, $X^3$, $X^4$ et $X^5$ le chlore, le brome ou l'iode, et $M^{\oplus}$ désigne un cation de métal alcalin ou ammonium quaternaire.

**2.** Composés selon la revendication 1, dans lesquels les groupes de phosphine et phosphinite comportent deux radicaux identiques ou différents pris parmi des $C_1$-$C_{12}$-alkyles linéaires ou ramifiés, des $C_5$-$C_8$-cycloalkyles non substitués ou portant un $C_1$-$C_6$-alkyle, et les radicaux phényle et benzyle éventuellement substitués par un $C_1$-$C_6$-alcoxy, un $(C_1$-$C_6$-alkyle$)_2$N-, F, ou un groupe $-SO_3H$, $-SO_3Na$ ou -COO-$C_1$-$C_6$-alkyle.

**3.** Composés selon la revendication 2, dans lesquels les groupes de phosphine et phosphinite comportent chacun deux radicaux phényle.

**4.** Composés selon la revendication 1, dans lesquels L est un $C_2$-$C_4$-alkylène linéaire sans substituants ou avec comme substituants un $C_1$-$C_6$-alkyle, un $C_5$- ou $C_6$-cycloalkyle, un phényle, un naphtyle ou un benzyle ; un 1,2- ou 1,3-cycloalkylène ou -cycloalcénylène, -bicycloalkylène ou -bicycloalcénylène avec de 4 à 10 atomes de carbone, qui peuvent être sans substituants ou substitués par un $C_1$-$C_6$-alkyle, un phényle ou un benzyle ; ou encore de tels radicaux cycliques avec un groupe méthylène ou $C_2$-$C_4$-alkylidène aux positions 1 et/ou 2 ou à la position 3 ; un 1,4-butylène avec à la position 2,3 un groupe

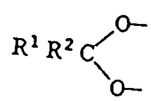

et sans substituants aux positions 1,4 ou avec des $C_1$-$C_6$-alkyles, phényle ou benzyle, $R^1$ et $R^2$, indépendamment l'un de l'autre, étant l'hydrogène, un $C_1$-$C_6$-alkyle, un phényle ou un benzyle ; un 3,4- ou 2,4-pyrrolidinylène ou un 2-méthylènepyrrolidin-4-yle, dont l'atome d'azote porte un radical $R^3$ qui peut être l'hydrogène, un $C_1$-$C_{12}$-alkyle, un phényle, un benzyle, un $C_1$-$C_{12}$-alcoxycarbonyle, un $C_1$-$C_8$-acyle ou un $C_1$-$C_{12}$-alkylaminocarbonyle ; ou encore un groupe 1,2-phénylène, 2-benzylène, 1,2-xylylène, 1,8-naphtylène, 2,2'-dinaphtylène ou 2,2'-diphénylène, qui peuvent être sans substituants ou substitués par des alkyles en $C_1$-$C_4$ ; et P désigne un groupe de phosphine ou de phosphinite secondaire.

**5.** Composés selon la revendication 1, dans lesquels L est le radical dioxyle d'un mono- ou disaccharide protégé et P un radical de phosphine secondaire monovalent.

**6.** Composés selon la revendication 1, dans lesquels les groupes P-L-P représentent un énantiomère ou un diastéréo-isomère d'une diphosphine ou d'un diphosphinite ditertiaire.

**7.** Composés selon la revendication 1, dans lesquels le groupe P-L-P est l'un des suivants :

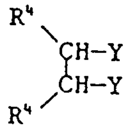 , 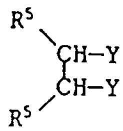 , 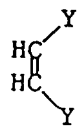 , 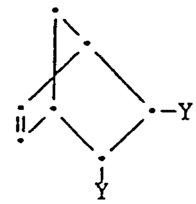 ,

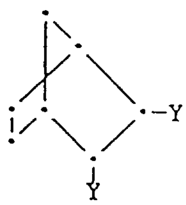 , 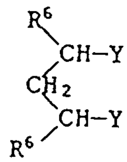 , 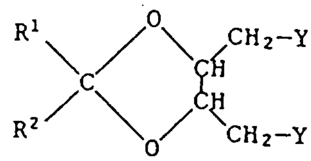 ,

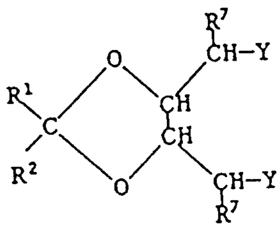 , 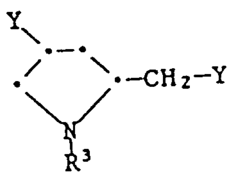 , 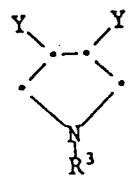 ou

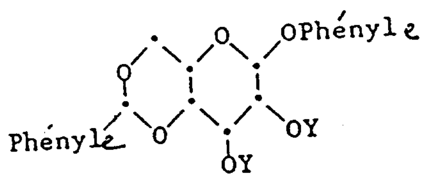

dans lesquels Y représente un -P(phényle)$_2$, $R^4$, $R^5$ et $R^6$ l'hydrogène, un $C_1$-$C_4$-alkyle, un cyclohexyle, un phényle ou un benzyle, $R^1$ et $R^2$ l'hydrogène, un $C_1$-$C_4$-alkyle, un phényle ou un benzyle et $R^7$ l'hydrogène ou un $C_1$-$C_4$-alkyle, et $R^3$ l'hydrogène, un $C_1$-$C_4$-alkyle, un phényle, un benzyle, un $C_1$-$C_6$-alcoxy-CO-, un $C_1$-$C_6$-alkyl-CO-, un phényl-CO-, un naphtyl-CO- ou un $C_1$-$C_4$-alkyl-NH-CO-.

**8.** Composés selon la revendication 7, dans lesquels le groupe P-L-P est un groupe de formule

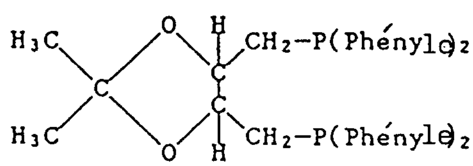

**9.** Composés selon la revendication 1, dans lesquels, dans la formule I, $X^1$ et $X^6$ représentent l'hydrogène et $X^2$ à $X^6$ chacun Cl, Br ou I, ou bien $X^1$ et $X^6$ sont l'hydrogène et $X^2$, $X^3$, $X^4$ et $X^6$ chacun Cl, Br ou I.

**10.** Composés selon la revendication 9, dans lesquels, dans la formule I, $X^2$ à $X^6$ ou bien $X^2$, $X^3$, $X^4$ et $X^6$ sont chacun l'iode.

**11.** Composés selon la revendication 1, dans lesquels, dans la formule I, $X^1$ à $X^6$ sont chacun le chlore, le brome ou l'iode.

**12.** Composés selon la revendication 11, dans lesquels, dans la formule I, $X^1$ à $X^6$ sont chacun l'iode.

13. Composés selon la revendication 1, dans lesquels, dans la formule Ia, les quatre X sont le chlore, le brome ou l'iode.

14. Composés selon la revendication 13, dans lesquels, dans la formule Ia, les quatre X sont chacun l'iode.

15. Composés selon la revendication 1, dans lesquels, dans la formule Ia, $M^{\oplus}$ désigne $Li^{\oplus}$, $Na^{\oplus}$, $K^{\oplus}$ ou un cation $(C_1\text{-}C_6\text{-alkyl})_4N^{\oplus}$.

16. Procédé de préparation des composés de formules I et Ia ou de mélanges de ces composés, selon la revendication 1, procédé caractérisé en ce que l'on fait réagir à une température élevée dans une cétone comme solvant un composé de formule II

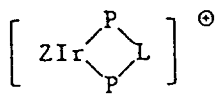 $A^{\ominus}$ (II)

Z désignant deux ligands d'oléfines ou un ligand de diène, $A^{\ominus}$ l'anion d'un acide oxygéné ou complexe et le groupe P-L-P ayant la signification indiquée dans la revendication 1, avec un excès d'un sel de formule III

$M^{\oplus}X^{\ominus}$ (III)

$M^{\oplus}$ désignant un cation de métal alcalin ou ammonium quaternaire et X le chlore, le brome ou l'iode, ou avec plusieurs de ces sels à la fois.

17. Emploi de composés de formule I ou Ia ou de leurs mélanges selon la revendication 1 comme catalyseurs homogènes pour l'hydrogénation d'imines substituées sur l'azote.

18. Emploi selon la revendication 17, dans lequel, dans les formules I et Ia, le groupe P-L-P est un énantiomère ou un diastéréomère d'une diphosphine ou d'un diphosphinite ditertiaire, pour l'hydrogénation asymétrique d'imines prochirales substituées sur l'azote.

19. Procédé de préparation d'amines secondaires par hydrogénation d'imines N-substituées avec de l'hydrogène à une température de -20 à 80 °C et sous une pression d'hydrogène de $10^5$ à $5.10^7$ Pa en présence d'un complexe d'iridium comme catalyseur homogène, procédé caractérisé en ce que le catalyseur est un composé de formule I ou Ia selon la revendication 1 ou un mélange de plusieurs de ces composés.

20. Procédé selon la revendication 19, pour la préparation d'amines secondaires optiquement actives, procédé caractérisé en ce que, dans les formules I et Ia, le groupe P-L-P représente un énantiomère ou un diastéréomère d'une diphosphine ou d'un diphosphinite ditertiaire et en ce que l'on utilise une imine N-substituée prochirale.